(19) Europäisches Patentamt
European Patent Office
Office européen des brevets

(11) **EP 4 058 229 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **20804486.7**

(22) Anmeldetag: **09.11.2020**

(51) Internationale Patentklassifikation (IPC):
**B23K 9/073** *(2006.01)*   **B23K 9/08** *(2006.01)*
**B23K 9/167** *(2006.01)*

(52) Gemeinsame Patentklassifikation (CPC):
**B23K 9/08; B23K 9/0737;** B23K 9/167

(86) Internationale Anmeldenummer:
**PCT/EP2020/081421**

(87) Internationale Veröffentlichungsnummer:
**WO 2021/094233 (20.05.2021 Gazette 2021/20)**

(54) **RICHTAPPARATUR ZUR AUSRICHTUNG EINES LICHTBOGENS EINES LICHTBOGENSCHWEISSGERÄTES ZUM LICHTBOGENSCHWEISSEN MIT MAGNETISCH BEWEGTEM LICHTBOGEN UND VERWENDUNG DER RICHTAPPARATUR**

ALIGNMENT APPARATUS FOR ALIGNING AN ARC OF A WELDING  DEVICE WITH MAGNETICALLY MOVED ARC AND USE OF THE ALIGNMENT APPARATUS

APPAREIL D'ALIGNEMENT POUR ALIGNER L'ARC D'UN APPAREIL DE SOUDAGE À ARC DÉPLACÉ MAGNÉTIQUEMENT ET UTILISATION DE L'APPAREIL D'ALIGNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2019   DE 102019130643**

(43) Veröffentlichungstag der Anmeldung:
**21.09.2022   Patentblatt 2022/38**

(73) Patentinhaber: **Endress+Hauser Flowtec AG 4153 Reinach (CH)**

(72) Erfinder:
• **BOSSE, Lüder 4127 Birsfelden (CH)**
• **MARIAGER, Simon 4059 Basel (CH)**
• **OBER, Pierre-Jean 68170 Rixheim (FR)**
• **WOHLGEMUTH, Werner 4206 Seewen (DE)**

(74) Vertreter: **Penner, Paul Endress + Hauser Group Services (Deutschland) AG+Co. KG PatServe Colmarer Straße 6 79576 Weil am Rhein (DE)**

(56) Entgegenhaltungen:
CA-A1- 2 083 311   DE-A1- 1 615 485
DE-A1- 2 626 825   JP-A- S58 205 679
JP-A- S6 149 776   US-A- 4 321 455
US-A1- 2014 151 345   US-B1- 6 617 547

**Beschreibung**

Die vorliegende Erfindung betrifft Richtapparatur zur Ausrichtung eines Lichtbogens eines Lichtbogenschweißgerätes zum Lichtbogenschweißen, insbesondere zum WIG-schweißen, mit magnetisch bewegtem Lichtbogen nach dem Oberbegriff des Anspruchs 1 und eine Verwendung der Richtapparatur. WIG-Schweißen ist als eine Variante des Schmelzschweißens mit magnetischgeführtem Lichtbogen bekannt. Die Funktionsweise eines Lichtbogenschweißgerätes ist aus der JP S61 49776 A, DE 26 26 825 A1 und der JP S58 205679 A bekannt und wird im Rahmen der vorliegenden Erfindung als Fachwissen vorausgesetzt. Der Lichtbogen kann dabei eine Anzahl von mehreren Elektronenladungen erzeugt werden. Da ein Lichtbogen über ein Eigenmagnetfeld verfügt, spricht er auf ein Magnetfeld an. Daher ist es möglich, den Lichtbogen durch ein äußeres Magnetfeld abzulenken und auszurichten. Z Weiterhin sind aus der US 6 617 547 B1, US 4 321 455 A und US 2014/151345 A1 (offenbarend den Oberbegriff des Anspruchs 1) Apparaturen zur Ausrichtung eines Lichtbogens mit vier Polschuhen bekannt.

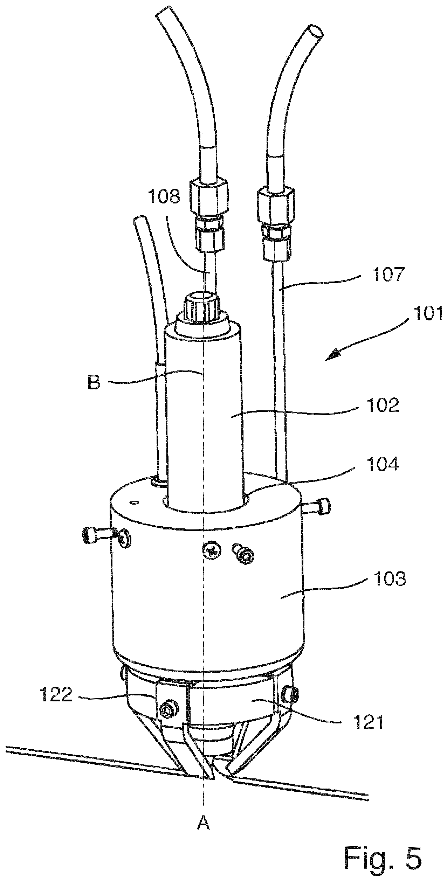

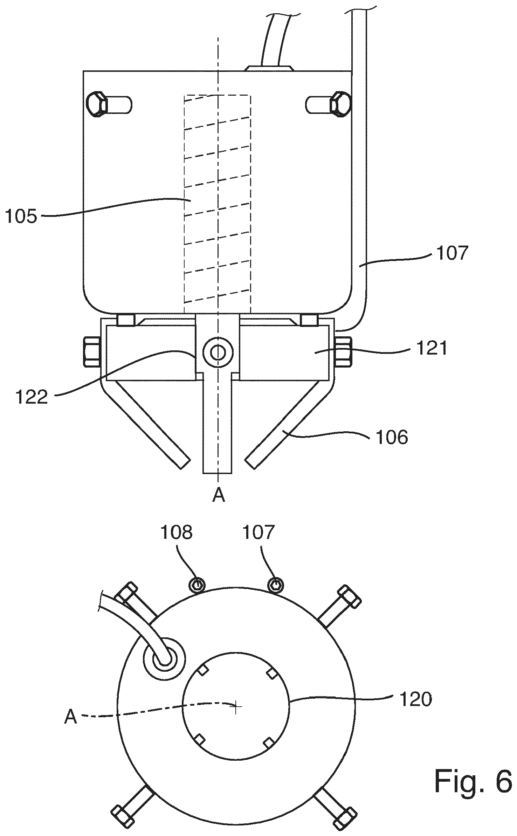

Fig. 5-7 offenbaren eine Variante einer Richtapparatur nach dem Stand der Technik zur Ausrichtung eines Lichtbogens im Rahmen eines magnetisch geführten Lichtbogen-Schweißvorgangs. Der Lichtbogen wird innerhalb einer rohrförmigen Öffnung generiert und tritt aus der Öffnung in Richtung eines zu verschweißenden Werkstücks aus. Aus dem Gehäuse der Richtapparatur stehen vier Polschuhe hervor, welche ein äußeres Magnetfeld im Bereich des Lichtbogens positionieren. Generiert wird das Magnetfeld durch vier Elektromagnete bzw. Magnetspulen, welche symmetrisch um die Öffnung herum angeordnet sind und in den Fig. 5-7 verdeckt durch das Gehäuse der Richtapparatur sind. Das Magnetfeld wird sodann jeweils an einem oder mehrere Polschuhe übertragen, welche je nach Stärke des jeweiligen Magnetfeldes den Lichtbogen mehr in die eine oder andere Richtung auslenken.

Problematisch ist dabei, dass die Ablenkung bei der in Fig. 5-7 dargestellten Richtapparatur nur sehr gering ist, so dass zur Auslenkung die Magnetspulen mit einer hohen Betriebsstromstärke betrieben wurden. Dies ist keine energieeffiziente und materialschonende Arbeitsweise.

Ausgehend vom vorgenannten Stand der Technik ist es Aufgabe der vorliegenden Erfindung, die Richtapparatur der Fig. 5-7 derart weiterzuentwickeln, dass eine stärkere Ablenkung des Lichtbogens bei gleichem Energieeinsatz erfolgt, oder eine Verringerung des Energieeinsatzes bei gleich starker Ablenkung des Lichtbogens erfolgt. Insgesamt ermöglicht die erfindungsgemäße Richtapparatur gegenüber der bekannten Variante der Fig. 5-7 eine optimiertere Arbeitsweise.

Die vorliegende Erfindung löst diese Aufgabe durch eine Richtapparatur mit den Merkmalen des Anspruchs 1.

Eine erfindungsgemäße Richtapparatur dient zur Ausrichtung eines Lichtbogens eines Lichtbogen-Schweißgeräts zum Lichtbogenschweißen, insbesondere zum WIG-schweißen (Wolfram Inertgasschweißen), mit magnetisch bewegtem Lichtbogen. Die Richtapparatur umfasst

i eine Haltevorrichtung mit einer Öffnung zur Aufnahme eines Schweißkopfes des Lichtbogen-Schweißgerätes;

ii eine oder mehrere Magnetspulen zur Ausbildung eines Magnetfeldes zur Auslenkung eines von einem LichtbogenSchweißgerät in der Öffnung generierten Lichtbogen; und

iii zumindest zwei gebogene Polschuhe umfassend zumindest zwei Schenkel zur Fokussierung des Magnetfeldes.

Dabei ist ein erster der Schenkel eines jeden Polschuhs an der Haltevorrichtung und/oder an der Magnetspule festgelegt, und ein zweiter der Schenkel ist in einem Winkel weniger als 130° zum ersten Schenkel ausgerichtet.

Der zweite Schenkel kann vorzugsweise eine endständige Stirnseite aufweisen. Zwischen dem ersten und den zweiten Schenkel können weitere Segmente des Polschuhs angeordnet sein, es ist allerdings bevorzugt, wenn der erste Schenkel unmittelbar in den zweiten Schenkel übergeht.

Für eine bessere Steuerung des Lichtbogens in vier Richtungen weist die Richtapparatur zumindest vier Polschuhe auf, wobei die zweiten Schenkel der Polschuhe derart zueinander ausgerichtet sind, dass ein Polschuh um weniger als jeweils 3 mm zum benachbarten Polschuh beabstandet ist, was zudem eine zusätzliche Fokussierung ermöglicht.

Durch die Ausrichtung von weniger als 130° wird zum Ausdruck gebracht, dass der zweite Schenkel um zumindest 50° abgeknickt ist. Besonders bevorzugt kann die Ausrichtung jedoch 125-115° betragen und insbesondere 120°.

Die gegenüber dem Stand der Technik geringfügig-stärkere Abknickung des Polschuhs hat den überraschenden Effekt, dass die Magnetfeldstärke um zumindest 30%, insbesondere jedoch um sogar 40-60% erhöht wird. Mit der Erhöhung der Magnetfeldstärke geht eine Fokussierung des Magnetfelds einher. Die Magnetfeldstärke wird also an der Stelle fokussiert, an welcher sie für die Ablenkung des Magnetfelds benötigt wird.

Weitere vorteilhafte Ausgestaltungen sind Gegenstand der Unteransprüche.

Bevorzugt sind zur besseren Fokussierung die zweiten Schenkel zweier Polschuhe zueinander hin gerichtet.

Aufbauschwierigkeiten, die zum magnetischen Kurzschluss führen können, können vorteilhaft vermieden werden, wenn der Spalt eine bestimmte Größe aufweist. Ein Luftspalt von kleiner als 5 mm zwischen den Polschuhen unter Einhaltung der vorgenannten Randbedingung ist daher besonders bevorzugt.

Zur Vermeidung von Magnetfeldverlusten ist es von Vorteil, wenn die Polschuhe entlang ihrer Längserstreckung eine einheitliche Breite aufweisen.

Bevorzugt weisen die Polschuhe eine Dicke von zumindest 3 mm, vorzugsweise 4,5 bis 6 mm auf.

Zur Bearbeitung und zum Leiten des Magnetfeldes sind die Polschuhe aus Stahl, vorzugsweise einem Qualitätsstahl, besonders bevorzugt aus einem Stahl mit der Werkstoffnummer 1.0122 und/oder 1.0038, ausgebildet.

Sofern die Magnetspule oder der Spulenkern defekt ist, ist es von Vorteil, wenn die Magnetspule einen Spulenkörper, insbesondere einen Kunststoffkörper, umfasst. Zur Ausbildung eines entsprechenden Magnetfelds bietet sich an, dass der Spulenkörper mit einem gewickelten Draht umwickelt ist, vorzugsweise mit zumindest 450 Windungen. Die Magnetspule weist einen Spulenkern auf, welcher innerhalb des Spulenkörpers angeordnet ist. Die Nutzung eines Spulenkörpers hat zudem Vorteile bei der Wärmeableitung und der Robustheit der Magnetspule.

Die Haltevorrichtung ist röhrenförmig ausgebildet, so dass ein Schweißkopf aufgenommen werden kann. Sie weist am oberen Ende der Röhre jeweils eine metallische, vorzugsweise magnetisierbare, Ringscheibe auf, mit Ausnehmungen zur teilweisen formschlüssigen Halterung der Polschuhe. Am unteren Ende der Röhre kann besonders bevorzugt eine nicht-magnetisierbare Ringscheibe angeordnet sein, um keinen magnetischen Kurzschluss zu erzeugen.

Weiterhin erfindungsgemäß ist die Verwendung einer erfindungsgemäßen Richtapparatur in einem Lichtbogen-Schweißgeräts zum WIG-schweißen mit magnetisch bewegtem Lichtbogen, wobei die Auslenkung des Lichtbogens bei einer Betriebsstromstärke von 1A zumindest 125 G, vorzugsweise zumindest 150 G, besonders bevorzugt zwischen 155 bis 200 G, beträgt.

Es ist von Vorteil, wenn das Lichtbogenschweißgerät eine Kontrolleinheit aufweist, welche derart ausgerichtet und mit den Magnetspulen verbunden ist, dass eine individuelle Ansteuerung der Magnetspulen erfolgt. Dadurch kann eine wesentlich umfangreichere Ablenkung sowie prinzipiell eine freie Bewegung in jede mögliche Richtung der 2D Ebene bei der Ablenkung des Lichtbogens erreicht werden.

Die Erfindung wird nachfolgend anhand eines Ausführungsbeispiels und in Gegenüberstellung mit einem Stand der Technik näher erläutert. Es zeigen:

Fig. 1     eine Darstellung eines Spulenkerns;

Fig. 2     eine Darstellung einer im Rahmen der vorliegenden Erfindung verwendeten Magnetspule;

Fig. 3     eine Darstellung eines im Rahmen der vorliegenden Erfindung verwendeten Polschuhs;

Fig. 4     eine Messung der Magnetfeldverteilung in axialer Länge der Richtapparatur;

Fig. 5     eine Seitenansicht eines Teils eines Lichtbogenschweißgeräts nach dem Stand der Technik;

Fig. 6     eine Seitenansicht einer Richtapparatur des Lichtbogenschweißgeräts der Fig. 5 zur Ausrichtung eines Lichtbogens;

Fig. 7     eine Ansicht eines Lichtbogenschweißvorgangs mittels des Lichtbogenschweißgeräts nach Fig. 5 und 6; und

Fig. 8     eine Messung der Magnetfeldverteilung in axialer Länge der Richtapparatur des Lichtbogenschweißgerätes der Fig. 5-7.

Fig. 5-7 zeigt eine Ausführungsvariante eines an sich bekannten Lichtbogenschweißgerätes 101. Es handelt sich um ein Lichtbogenschweißgerät zum WIG-Schweißen, also Schmelzschweißen mit magnetisch bewegtem Lichtbogen ohne Schweißzusatz, gemäß EN ISO 4063: 2011-03 Hauptgruppe 14, Untergruppen 142 (ohne Zusatz)

Mit dem Verfahren werden u.a. Hohlprofile miteinander verschweißt. So können z.B. Rohre von Durchflussmessgeräten mit Flanschen oder anderen Prozessanschlüssen versehen werden. Dabei wird ein Lichtbogen zwischen den Fügeteilflächen gezündet und in einem Magnetfeld zur Bewegung entlang der Fügeteilkanten veranlasst.

Der elektrische Lichtbogen wird zwischen dem Werkstück und einer Elektrode aus Wolfram erzeugt. Im Gegensatz zu anderen Lichtbogenverfahren schmilzt die beim WIG-Schweißen verwendete Elektrode aufgrund des hohen Schmelzpunktes von Wolfram nicht ab. Der Zusatzwerkstoff wird in Form von Drähten oder Stäben in den Lichtbogen gehalten und so geschmolzen. Allerdings ist auch ein Schweißen ohne Zusatzwerkstoff möglich. Außerdem schmilzt der Lichtbogen wie bei allen Lichtbogenverfahren den Grundwerkstoff. Damit die Schmelze nicht mit der Umgebungsluft reagiert, werden Schutzgase verwendet, die inert sind, also keine chemischen Reaktionen mit den beteiligten Werkstoffen eingehen. Häufig handelt es sich um Argon oder Helium. Mit dem WIG-Schweißen sind besonders hohe Nahtqualitäten zu erreichen, es ist aber etwas langsamer als das verwandte Metall-Inertgas-Schweißen (mit abschmelzender Drahtelektrode).

Das Lichtbogenschweißgerät 101 der Fig. 5-7 weist einen stabförmigen Brenner bzw. Schweißkopf 102 mit einer Längsachse B auf, welcher zum Erzeugen und der Versorgung eines Lichtbogens dient. Der Schweißkopf 102 ist bereichsweise von einer Richtapparatur 103 eingefasst, welche im Wesentlichen konzentrisch um den Schweißkopf herum angeordnet ist. Die Richtapparatur 103 umfasst eine zentrale röhrenartige Öffnung 104 mit einer Längsachse A zum Einführen des Schweißkopfes 102 in die Richtapparatur, so dass die Längsachse A und die Längsachse B aufeinander liegen Um die Öffnung 104 herum sind umfangsverteilt mit gleichem radialen Abstand zur Längsachse A mehrere Elektromagnete 105 angeordnet, zum Aufbau eines externen radialen Magnetfelds. Durch die Geschwindigkeit der Elektronenladung des Lichtbogens wird mit dem durch die Elektromagnete erzeugten externen radialen Magnetfeld senkrecht zur Lichtbogenstromrichtung eine Lorenzkraft erzeugt.

Es gilt der Zusammenhang:

$$F = q \, v \, B$$

Diese Lorenzkraft ermöglicht eine Führung des Lichtbogens z.B. entlang der Fügekanten eines zu verschweißenden Hohlprofils.

Die Elektromagnete 105 sind als Magnetspulen mit Magnetkernen ausgebildet. Die Magnetkerne sind an einer Haltevorrichtung 120 angeordnet und mit Polschuhen 106, zur Ausrichtung des Magnetfeldes, verbunden. Die Haltevorrichtung 120 kann als ein röhrenförmiger Kunststoffkörper mit endständigen metallischen magnetisierbaren Ringscheiben 121 ausgebildet sein. Eine der Ringscheiben 121 weist Ausnehmungen 122 zur bereichsweisen Aufnahme und/oder Positionierung der Polschuhe 106 auf. Durch Ansteuerung der Elektromagnete 105 und durch die anschließende Leitung des Magnetfeldes durch die Polschuhe 106 kann der durch den Schweißkopf geformte Lichtbogen auf eine Kreisbahn abgelenkt werden. Weiterhin weist die Richtapparatur 103 eine Kühlungszu- und ableitung 107 und 108 als Teil eines Kühlsystems 109 auf, um die Wärme des Schweißkopfes abzuleiten.

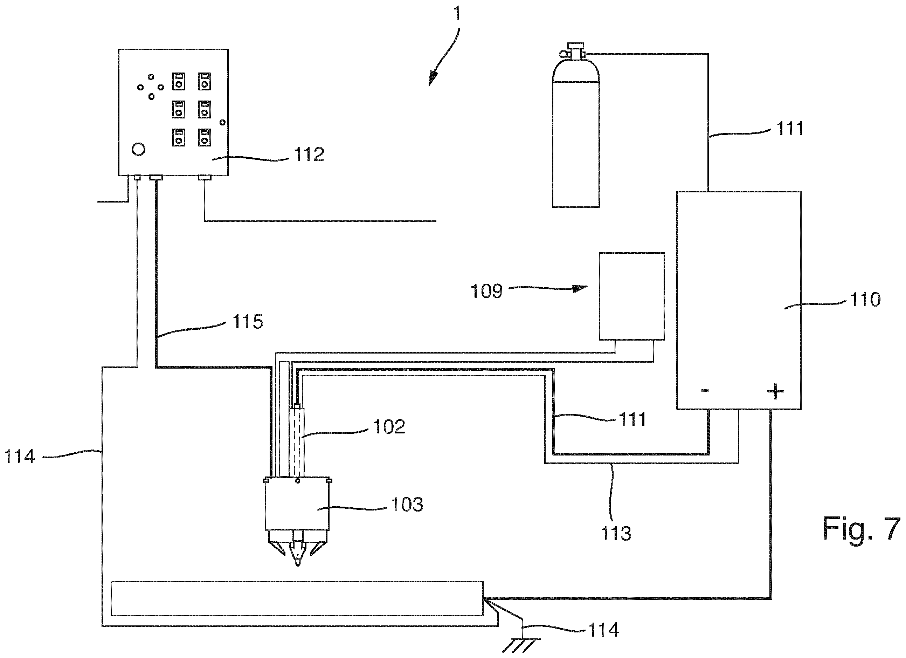

Fig. 7 zeigt weitere Bauteile des Lichtbogenschweißgeräts 101, umfassend eine Stromquelle 110, ein Schutzgaszuleitung 111 und ein Kontrolleinheit 112, sowie weitere Leitungen, insbesondere eine Stromleitung 113, eine Erdungsleitung 114, eine Signalübertragungsleitung 115.

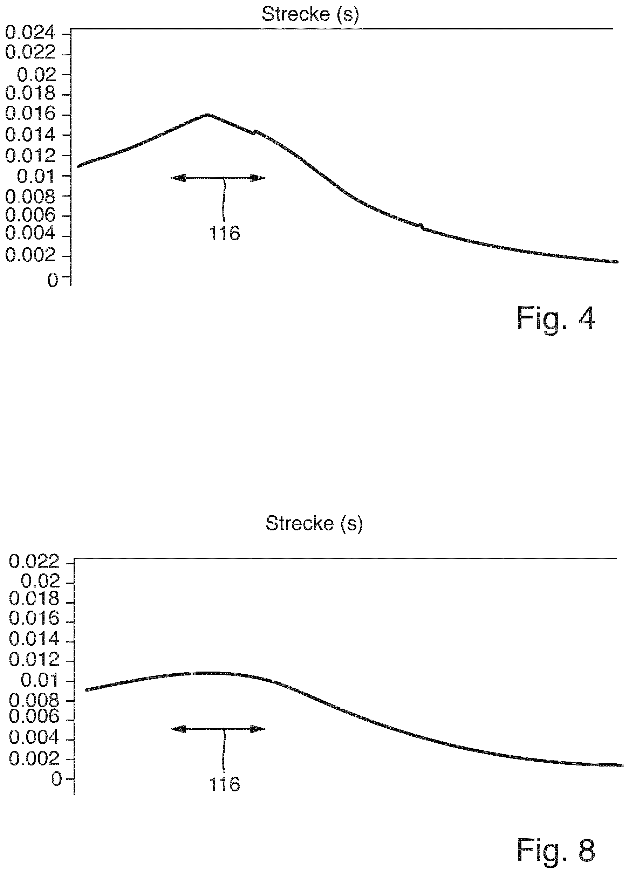

Fig. 8 zeigt ein Diagramm einer magnetischen Feldstärke im Bereich der Lichtbogenzone 116. Diese weist bei 1 A Betriebs-Stromstärke einen Wert von 110 G. Entsprechend gering ist die Auslenkung des Lichtbogens durch die Richtapparatur 103 des Lichtbogenschweißgerätes 101.

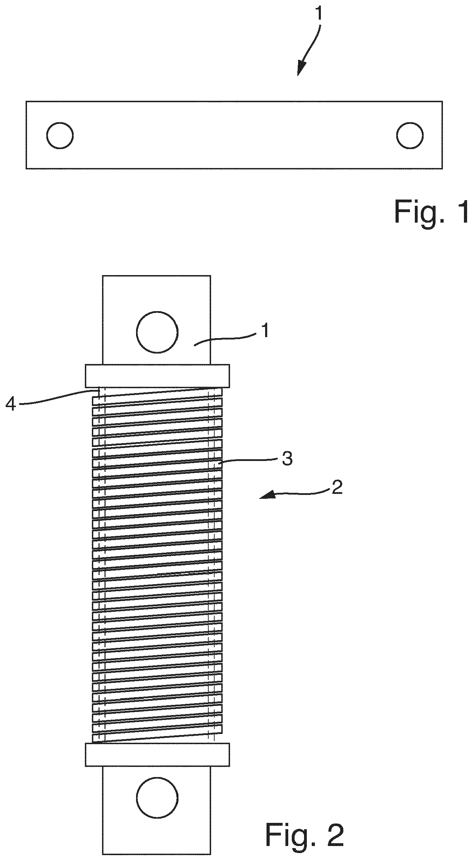

Die in Fig. 5-7 dargestellte Richtapparatur 103 des Lichtbogenschweißgeräts wurde um die in Fig. 1-3 dargestellten Bauteile abgeändert. Diese Bauteile werden in der Richtapparatur 103 eingesetzt, wodurch die welche ansonsten unverändert genutzt wird.

Fig. 5 zeigt einen Spulenkern 1, umfassend eine Mehrzahl an Leitblechen, welche zu dem Spulenkern 1 zusammengefasst sind. Als Kernmaterial kann vorzugsweise Metall mit der Werkstoffnummer 1.0122 und/oder 1.0038 eingesetzt werden. Die Länge des Spulenkerns beträgt zumindest 10 cm.

Fig. 2 zeigt eine Magnetspule 2, umfassend den Spulenkern 1 zum Einsatz in der Richtapparatur 103. Bei der Magnetspule des Standes der Technik wurde ein Draht 3 um einen papierumwickelten Kern eingesetzt. Im Unterschied dazu weist die Magnetspule 2 der erfindungsgemäßen Richtapparatur nunmehr einen Spulenkörper 4 aus Kunststoff auf. Auf den Spulenkörper wurde ein Draht mit zumindest 500 Umdrehungen gewickelt. Dadurch kann die Spule 2 und der Spulenkern 1 getrennt voneinander ausgetauscht werden, was einen deutlichen Montagevorteil beinhaltet. Besonders bevorzugt kann der Spulenkörper aus Polyoxymethylen (POM) aufgebaut sein, welcher aufgrund seiner mechanischen Stabilität bei gleichzeitiger Temperaturwechselbeständigkeit gut für die Anwendung geeignet ist. Zur besseren Wärmeausbildung ist der Spulendraht 3 mit einem textilen Hochtemperaturklebeband umwickelt. Der Drahtdurchmesser beträgt zwischen 0.2 bis 0.6 mm.

Wie sich aus Fig. 5-7 ergibt, sind in der Richtapparatur 103 des Standes der Technik insgesamt vier Polschuhe und somit auch vier Magnetspulen vorgesehen. Bei der erfindungsgemäßen Richtapparatur sind ebenfalls vier Magnetspulen 2 vorgesehen, welche diametral entlang eines rohrförmigen Kunststoffkörpers angeordnet sind, welcher die Öffnung zum Einführen des Schweißkopfes umfasst. Der rohrförmige Kunststoffkörper ist endständig mit zwei Ringscheiben versehen, wobei eine dieser Ringscheiben zur Halterung des Spulenkerne 1 und der Polschule 5 vorgesehen ist.

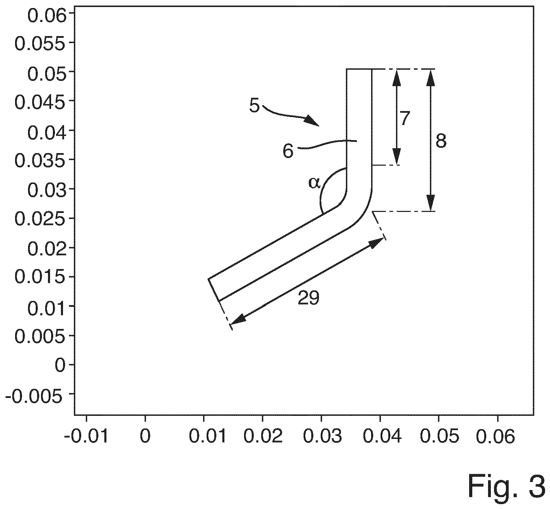

Um eine Verschweißung kleiner Rohre zu ermöglichen, wurde ein spezieller Polschuh 5 entwickelt, welcher um einen Winkel α weniger als 130°, vorzugsweise um 115-125°, insbesondere um 120°, gegenüber einer linearen Ausrichtung unter Ausbildung zweier Schenkel 8 und 9 gebogen ist. Dieser ist in Fig. 3 dargestellt.

Der Polschuh 5 der Fig. 3 weist zunächst einen ersten Abschnitt 6 mit einem parallelen Verlauf zur Längsachse B des Schweißkopfes 102 bzw. der Öffnung 104 auf.

Der Polschuh 5 weist innerhalb des Abschnitts 6 einen Kontaktbereich 7 auf, mit welchem er auf einer Halterung der Richtapparatur 103 aufliegt. Anders als im Stand der Technik ist der gesamte erste Abschnitt allerdings zumindest 1,2 fach, insbesondere jedoch 1,3 bis 2-fach so lang wie der Kontaktbereich 7. Die Dicke des Polschuhs beträgt 5 mm. Die Breite des Polschuhs ist einheitlich über seine gesamte Länge. Dadurch wird ein Verlust an Magnetfeld minimiert.

Vorteilhaft entspricht die Länge der Schenkel 8 und 9 des Polschuhs 1,2:1 bis 1:1,2.

Überraschend konnte durch die vorgenannten baulichen Änderungen eine erhebliche und unerwartete Fokussierung des Magnetfelds im Bereich des Lichtbogens erreicht werden. Fig. 4 zeigt die Ausbildung des Magnetfelds auf 160 G bei 1A Betriebs-Stromstärke, wodurch eine stärkere Ausrichtung des Lichtbogens erreicht werden kann.

Es versteht sich, dass es durch die Fokussierung des Magnetfeldes auch möglich ist eine gleiche Ablenkung des Lichtbogens wie in Fig. 5-8 bei geringerer Betriebsstromstärke zu erreichen als dies beim Stand der Technik der Fig. 5-8 bei 1 A Betriebsstromstärke erfolgt.

Im Ergebnis erfolgt u.a. eine geringere Erwärmung der Elektromagnete, wodurch eine Wasserkühlung der Richtapparatur vorteilhaft entfallen kann. Hierdurch kann die Richtapparatur zusätzlich miniaturisiert werden.

Die Steuerung der Ausrichtung des Magnetfeldes und damit auch des Lichtbogens kann über den jeweiligen Spulenstrom der Elektromagnete erfolgen. Während allerdings im Stand der Technik der Fig. 5-8 lediglich die Spulen paarweise gekoppelt sind, erfolgt beim Gegenstand der vorliegenden Erfindung eine individuelle Ansteuerung der jeweiligen Spule. Im Stand der Technik war es daher lediglich möglich kreisförmige oder elliptische Schweißbahnen zu bilden, während bei der individuellen Ansteuerung auch komplexere Schweißbahnen ausgebildet werden können. Anstelle der Kontrolleinheit 113 kann ein Drehpotentiometer vorgesehen sein, welcher eine individuelle Ansteuerung mit Individueller Stromquelle der jeweiligen Magnetspule 2 erlaubt.

Bezugszeichen

1 Spulenkern
2 Magnetspule
3 Spulendraht
4 Spulenkörper
5 Polschuh
6 Abschnitt
7 Kontaktbereich
8 Erster Schenkel
9 Zweiter Schenkel

101 Lichtbogenschweißgerät
102 Schweißkopf / Brenner
103 Richtapparatur
104 Öffnung
105 Elektromagnete
106 Polschuhe
107 Kühlungszuleitung
108 Kühlungsableitung
109 Kühlsystem
110 Stromquelle
111 Schutzgaszuleitung
112 Kontrolleinheit
113 Stromleitung
114 Erdungsleitung
115 Signalübertragungsleitung

116 Lichtbogenzone
120 Haltevorrichtung
121 Ringscheibe
122 Ausnehmungen

**Patentansprüche**

1. Richtapparatur (103) zur Ausrichtung eines Lichtbogens eines Lichtbogen-Schweißgeräts (101) zum Lichtbogenschweißen mit magnetisch bewegtem Lichtbogen umfassend

   i eine Haltevorrichtung (120) mit einer Öffnung (104) zur Aufnahme eines Schweißkopfes (102) des Lichtbogen-Schweißgerätes (101);
   ii eine oder mehrere Magnetspulen (2) zur Ausbildung eines Magnetfeldes zur Auslenkung eines von einem Schweißgerät (101) in der Öffnung (104) generierten Lichtbogen; und
   iii zumindest zwei gebogene Polschuhe (5) umfassend zumindest zwei Schenkel (8, 9) zur Fokussierung des Magnetfeldes;
   wobei ein erster der Schenkel (8) eines jeden Polschuhs (5) an der Haltevorrichtung (120) und/oder an der Magnetspule (2) festgelegt ist und dass ein zweiter der Schenkel (9) in einem Winkel ($\alpha$) weniger als 130° zum ersten Schenkel (8) ausgerichtet ist,
   wobei
   die Richtapparatur (103) zumindest vier Polschuhe (5) aufweist, **dadurch gekennzeichnet, dass**
   die zweiten Schenkel (9) der Polschuhe (5) derart zueinander ausgerichtet sind, dass ein Polschuh (5) um weniger als jeweils 3 mm zum benachbarten Polschuh (5) beabstandet ist.

2. Richtapparatur nach Anspruch 1, **dadurch gekennzeichnet, dass** die zweiten Schenkel (9) zweier Polschuhe (5) zueinander hin gerichtet sind.

3. Richtapparatur nach einem der vorhergehenden Ansprüche, **dadurch gekennzeichnet, dass** die Polschuhe (5) entlang ihrer Längserstreckung eine einheitliche Breite aufweisen.

4. Richtapparatur nach einem der vorhergehenden Ansprüche, **dadurch gekennzeichnet, dass** die Polschuhe (5) eine Dicke von zumindest 5 mm aufweisen.

5. Richtapparatur nach einem der vorhergehenden Ansprüche, **dadurch gekennzeichnet, dass** die Polschuhe (5) aus Stahl, vorzugsweise einem Qualitätsstahl, besonders bevorzugt aus einem Stahl mit der Werkstoffnummer 1.0122 und/oder 1.0038, ausgebildet sind.

**6.** Richtapparatur nach einem der vorhergehenden Ansprüche, **dadurch gekennzeichnet, dass** eine Magnetspule (2) einen Spulenkörper (4), insbesondere einen Kunststoffkörper, umfasst, um welchen ein gewickelter Draht (3), vorzugsweise mit zumindest 450 Windungen, angeordnet ist und dass die Magnetspule (2) einen Spulenkern (1) aufweist, welcher innerhalb des Spulenkörpers (4) angeordnet ist.

**7.** Richtapparatur nach einem der vorhergehenden Ansprüche, **dadurch gekennzeichnet, dass** die Haltevorrichtung (10) röhrenförmig ausgebildet ist und an jedem Ende jeweils eine Ringscheibe angeordnet ist, wobei eine erste der Ringscheiben als magnetisierbare Ringscheibe ausgebildet ist und eine zweite der Ringscheiben (121) als nicht-magnetisierbare Ringscheibe (121) ausgebildet ist, wobei zumindest die nicht-magnetisierbare Ringscheibe (121) Ausnehmungen (122) zur teilweise formschlüssigen Halterung der Polschuhe (5) aufweist.

**8.** Verwendung einer Richtapparatur (103) nach einem der vorhergehenden Ansprüche in einem Lichtbogen-Schweißgeräts (101) zum WIG-Schweißen mit magnetisch bewegtem Lichtbogen, **dadurch gekennzeichnet dass** das Magnetfeld zur Auslenkung des Lichtbogens bei einer Betriebsstromstärke von 1A bereichsweise zumindest 125 G, vorzugsweise zumindest 150 G, besonders bevorzugt zwischen 155 bis 200 G, beträgt.

**9.** Verwendung nach Anspruch 8, **dadurch kennzeichnet, dass** das Lichtbogenschweißgerät (101) eine Kontrolleinheit (112) aufweist, welche derart ausgebildet und mit den Magnetspulen (2) verbunden ist, dass eine individuelle Ansteuerung der Magnetspulen (2) erfolgt.

**Claims**

**1.** Alignment apparatus (103) for the alignment of an arc of an arc Welding apparatus (101) for arc welding with magnetically moved arc comprising

> i a holding device (120) with an opening (104) for receiving a welding head (102) of the arc welding device (101);
> ii one or more magnetic coils (2) for forming a Magnetic field for deflecting a magnetic field generated by a welding machine (101) generated in the opening (104); and
> iii at least two curved pole pieces (5) comprising at least two legs (8, 9) for focusing the magnetic field;
> wherein a first of the legs (8) of each pole piece (5) is fixed to the holding device (120) and/or to the solenoid coil (2) and that a second of the legs (9) is oriented at an angle (α) of less than 130° to the first leg (8), wherein the straightening apparatus (103) has at least four pole pieces (5), **characterized in that** the second legs (9) of the pole shoes (5) are aligned with each other in such a way that one pole piece (5) is less than 3 mm apart from the adjacent pole piece (5).

**2.** The straightening apparatus according to claim 1, **characterized in that** the second legs (9) of two pole pieces (5) are directed towards each other.

**3.** Straightening apparatus according to one of the preceding claims, **characterized in that** the pole pieces (5) have a uniform width along their longitudinal extent.

**4.** Straightening apparatus according to one of the preceding claims, **characterized in that** the pole pieces (5) have a thickness of at least 5 mm.

**5.** Straightening apparatus according to one of the preceding claims, **characterized in that** the pole shoes (5) are made of steel, preferably a quality steel, particularly preferably a steel with the material number 1.0122 and/or 1.0038.

**6.** Straightening apparatus according to one of the preceding claims, **characterized in that** a magnet coil (2) comprises a coil body (4), in particular a plastic body, around which a wound wire (3), preferably with at least 450 turns, is arranged, and **in that** the solenoid coil (2) has a coil core (1) which is arranged inside the coil body (4).

**7.** Straightening apparatus according to one of the preceding claims, **characterized in that** the holding device (10) is tubular in shape 10and a respective ring disc is arranged at each end, wherein a first of the ring discs is designed as a magnetizable ring disc and a second of the ring discs (121) is designed as a non-magnetizable ring disc (121), wherein at least the non-magnetizable ring disc (121) has recesses (122) for partially positive-locking retention of the pole shoes (121). (5).

**8.** Use of a straightening apparatus (103) according to one of the preceding claims in an arc welding apparatus (101) for TIG welding with a magnetically moved arc, **characterized in that** the magnetic field for deflecting the arc at an operating current of 1A is at least 125 G in some areas, preferably at least 150 G, particularly preferably between 155 and 200 G.

**9.** Use according to claim 8, **characterized in that** the

25arc welding device (101) has a control unit (112) which is designed and connected to the solenoid coils (2) in such a way that the solenoid coils (2) are individually controlled.

## Revendications

1. Appareil de redressement (103) pour l'alignement d'un arc électrique d'un appareil à arc électrique

   Appareil de soudage (101) pour le soudage à l'arc avec un arc déplacé magnétiquement comprenant

   i un dispositif de support (120) avec une ouverture (104) pour recevoir une tête de soudage (102) de l'appareil de soudage à l'arc (101) ;
   ii une ou plusieurs bobines magnétiques (2) pour former un Champ magnétique pour la déviation d'un faisceau de soudure émis par un appareil de soudage (101) dans l'ouverture (104) ; et
   iii au moins deux pièces polaires (5) courbées comprenant au moins deux branches (8, 9) pour la focalisation du champ magnétique

   une première des branches (8) de chaque pièce polaire (5) étant fixée au dispositif de maintien (120) et/ou à la bobine magnétique (2) et en ce qu'une deuxième des branches (9) est orientée selon un angle ($\alpha$) inférieur à 130° par rapport à la première branche (8),
   dans lequel l'appareil de redressement (103) comprend au moins quatre pièces polaires (5), **caractérisée en ce que** les secondes branches (9) des pièces polaires (5) sont orientées l'une par rapport à l'autre de telle sorte qu'une pièce polaire (5) est espacée de moins de 3 mm de la pièce polaire (5) voisine.

2. Appareil de dressage selon la revendication 1, **caractérisé en ce que** les seconds branches (9) de deux pièces polaires (5) sont orientées l'une vers l'autre.

3. Appareil de dressage selon l'une des revendications précédentes, **caractérisé en ce que** les pièces polaires (5) présentent une largeur uniforme le long de leur extension longitudinale.

4. Appareil de dressage selon l'une des revendications précédentes, **caractérisé en ce que** les pièces polaires (5) présentent une épaisseur d'au moins 5 mm.

5. Appareil de dressage selon l'une des revendications précédentes, **caractérisé en ce que** les pièces polaires (5) sont réalisées en acier, de préférence en un acier de qualité, de manière particulièrement préférée en un acier portant le numéro de matériau 1.0122 et/ou 1.0038.

6. Appareil de dressage selon l'une quelconque des revendications précédentes, **caractérisé en ce qu'**une bobine magnétique (2) comprend un corps de bobine (4), en particulier un corps en matière plastique, autour duquel est disposé un fil enroulé (3), de préférence avec au moins 450 spires et en ce que la bobine magnétique (2) présente un noyau de bobine (1) qui est disposé à l'intérieur du corps de bobine (4).

7. Appareil de dressage selon l'une des revendications précédentes, **caractérisé en ce que** le dispositif de maintien (10) est de forme tubulaire. et un disque annulaire est disposé à chaque extrémité, un premier des disques annulaires étant réalisé sous la forme d'un disque annulaire magnétisable et un deuxième des disques annulaires (121) étant réalisé sous la forme d'un disque annulaire non magnétisable (121), au moins le disque annulaire non magnétisable (121) présentant des évidements (122) pour le maintien partiellement par complémentarité de forme des pièces polaires (5).

8. Utilisation d'un appareil de dressage (103) selon l'une des revendications précédentes dans un appareil de soudage à l'arc (101) pour le soudage TIG avec un arc électrique déplacé magnétiquement, **caractérisée en ce que** l'appareil de dressage (103) est conçu de telle sorte que l'arc électrique est déplacé magnétiquement.
   champ magnétique pour la déviation de l'arc électrique pour une intensité de courant de fonctionnement de 1A est, par zones, d'au moins 125 G, de préférence d'au moins 150 G, de manière particulièrement préférée entre 155 et 200 G.

9. Utilisation selon la revendication 8, **caractérisée en ce que** le Appareil de soudage à l'arc (101) présente une unité de contrôle (112) qui est conçue et reliée aux bobines magnétiques (2) de telle sorte qu'une commande individuelle des bobines magnétiques (2) est effectuée.

Fig. 1

Fig. 2

Fig. 3

Strecke (s)

Fig. 4

Strecke (s)

Fig. 8

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S6149776 A
- DE 2626825 A1
- JP S58205679 A
- US 6617547 B1
- US 4321455 A
- US 2014151345 A1